(19) Europäisches Patentamt
European Patent Office
Office européen des brevets

(11) Veröffentlichungsnummer: **0 021 042**
**B1**

# (12) EUROPÄISCHE PATENTSCHRIFT

(45) Veröffentlichungstag der Patentschrift: **18.05.83**

(51) Int. Cl.³: **C 09 J 3/16**

(21) Anmeldenummer: **80102815.0**

(22) Anmeldetag: **21.05.80**

## (54) Thermoplastische, segmentierte elastomere Copolyätherester und ihre Verwendung als Haftkleber.

(30) Priorität: **25.06.79 DE 2925582**

(43) Veröffentlichungstag der Anmeldung: **07.01.81 Patentblatt 81/1**

(45) Bekanntmachung des Hinweises auf die Patenterteilung: **18.05.83 Patentblatt 83/20**

(84) Benannte Vertragsstaaten: **AT BE DE FR GB IT NL SE**

(56) Entgegenhaltungen: **FR-A-2 317 347**

(73) Patentinhaber: **BASF Aktiengesellschaft, Carl-Bosch-Strasse 38, D-6700 Ludwigshafen (DE)**

(72) Erfinder: **Neuberg, Rainer, Dr., Duerkheimer Strasse 9, D-6701 Dannstadt-Schauernheim 2 (DE)**
Erfinder: **Matthies, Hans Georg, Dr., Homburger Strasse 2, D-6700 Ludwigshafen (DE)**
Erfinder: **Druschke, Wolfgang, Dr., Berliner Strasse 28, D-6711 Dirmstein (DE)**

EP 0 021 042 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Thermoplastische, segmentierte elastomere Copolyätherester und ihre Verwendung als Haftkleber

Copolyester und speziell segmentierte Copolyätherester wurden bereits als Heissschmelzkleber bzw. Schmelzhaftkleber z.B. in den US-Patentschriften Nrn. 3832314 und 3932326 beschrieben. Copolyätheresterhaftkleber werden weiterhin in der GB-A Nr. 1494685 geschildert.

Diese Copolyätherester weisen kurzkettige und langkettige Estersegmente auf.

Während bei Klebern, die aus der Schmelze verarbeitet werden, eine relativ kurze offene Zeit ausreicht, innerhalb derer die Verklebung durchgeführt wird, sind als Haftkleber nur solche Produkte verwendbar, welche eine unendlich lange offene Zeit (bei Zimmertemperatur) aufweisen, d.h. einen dauerklebrigen Film bilden. Daher müssen diese Haftkleber eine hohe Oberflächenklebrigkeit bei guter Kohäsion zeigen, ohne dass jedoch die Schmelzviskosität zu hoch ist.

Die Copolyester- und Copolyätheresterhaftkleber gemäss Stand der Technik weisen zwar bisher schon ein für einige wenige Anwendungen zufriedenstellendes Adhäsionsniveau auf, die Kohäsion lässt jedoch noch zu wünschen übrig.

Aufgabe der vorliegenden Erfindung sind Haftkleber mit verbesserten Eigenschaften, vor allem mit verbesserter Kohäsion.

Es wurde nun gefunden, dass thermoplastische, segmentierte elastomere Copolyätherester, die im wesentlichen aus einer Vielzahl von wiederkehrenden, durch Esterbindungen miteinander verbundenen kurzkettigen und langkettigen Estereinheiten bestehen, wobei der Anteil der kurzkettigen Estereinheiten der Formel

$$-\underset{\underset{O}{\|}}{C}-R-\underset{\underset{O}{\|}}{C}-O-A-O- \qquad (I)$$

15 bis 75 Gew.% beträgt und der Anteil der langkettigen Estereinheiten der Formel

$$-\underset{\underset{O}{\|}}{C}-R-\underset{\underset{O}{\|}}{C}-O-B-O- \qquad (II)$$

25 bis 85 Gew.% des Copolyesters beträgt, und R den nach Abzug der Carboxylgruppen von aromatischen, aliphatischen oder cycloaliphatischen Dicarbonsäuren mit einem Molekulargewicht < 350 verbleibenden zweiwertigen Rest, A den nach Abzug der Hydroxylgruppen von einem Diol mit einem Molekulargewicht < 250 verbleibenden zweiwertigen Rest und B den nach Abzug der endständigen Hydroxylgruppen von einem langkettigen Glykol verbleibenden zweiwertigen Rest bedeuten, die 0,01 bis 5 mol%, bezogen auf den Copolyätherester an verzweigend wirkenden mindestens 3-10 Hydroxy-, Carboxyl- und/oder Carboxymethylgruppen je Molekül aufweisenden Verbindungen in das Polymermolekül eingebaut bzw. einkondensiert enthalten, besonders gut für die Herstellung von Haftklebern geeignet sind.

Diese neuen segmentierten Copolyätherester ergeben hervorragende Haftkleber, wenn ihnen in Anteilen von 1 bis 99 Gew.%, bezogen auf das Gesamtgemisch an sich übliche klebrigmachende thermoplastische Harze, die mit dem Copolyätherester verträgliche Gemische bilden, zugesetzt werden, wobei die Harze vorzugsweise niedrige Molekulargewichte, insbesondere von 500 bis 4000 haben. Die hier angegebenen Molekulargewichte werden osmometrisch mittels Dampfdruckosmometer (Fa. Mechrolab) bestimmt.

Die Herstellung von geringfügig verzweigten oder vernetzten Polyestern ist schon in den britischen Patentschriften Nrn. 1323345 und 1262818 beschrieben. Die Verarbeitbarkeit dieser bekannten verzweigten bzw. vernetzten Polyester zu Fasermaterialien, z.B. durch Schmelzspinnen und Verstrecken, wird jedoch mit zunehmender Verzweigung bzw. Vernetzung schwieriger und schliesslich ganz unmöglich. Die Konzentrationen der Vernetzungskomponenten liegen dabei im allgemeinen unter 1 mol%. Die so hergestellten Fasern und Fäden haben gerade auf Grund ihrer verschlechterten Eigenschaften (wie geringere Reiss- und Biegefestigkeiten) Anwendung auf dem lowpilling-Sektor gefunden. Durch den Einbau dieser Verzweigungen wird eine Verbreiterung der Molekulargewichtsverteilung herbeigeführt, die zu verminderten Festigkeitswerten, Versprödung und Verhärtung führt.

Der Einsatz verzweigend wirksamer Comonomeren in Copolyätherestern gemäss der vorliegenden Erfindung hat demgegenüber überraschenderweise keine versprödende oder verhärtende Wirkung, sondern erhöht im Gegenteil in hervorragender Weise die Kohäsions- und Adhäsionswerte.

Zur Herstellung der Copolyätherester können aromatische, aliphatische oder cylcoaliphatische Dicarbonsäuren mit niedrigem Molekulargewicht verwendet werden, die verschiedene Substituenten enthalten, die nicht in die Polykondensationsreaktion eingreifen. Geeignete aromatische Dicarbonsäuren sind besonders Terephthalsäure, Isophthalsäure und Phthalsäure sowie ferner 2,6-Naphthalindicarbonsäure. Hydroxysäuren, wie beispielsweise p-Hydroxybenzoesäure, können zusätzlich verwendet werden, wenn eine aromatische Dicarbonsäure mitverwendet wird. Geeignete aliphatische und cylcoaliphatische Dicarbonsäuren sind vor allem Adipinsäure, Sebazinsäure und 1,4-Cyclohexandicarbonsäure. Die Dicarbonsäuren haben im allgemeinen 4 bis 12 C-Atome.

Als Diole eines Molekulargewichts unter 250 bzw. deren esterbildende Derivate, die zur Herstellung der harten Segmente der Copolyätherester verwendet werden, sind solche geeignet, die unter Bildung kurzkettiger Estereinheiten reagieren, beispielsweise aliphatische, alicyclische oder aromatische Dihydroxyverbindungen, die vorzugsweise 2 bis 15 C-Atome enthalten, wie Äthylen-, Propylen-, Tetramethylen-, Hexamethylen-, Decamethylenglykol, Cyclohexandimethanol und Hydrochinon. Auch Bisphenole, wie 2,2'-Bis-(p-hydroxyphenyl)propan und Bis-4,4'-(hydroxyphenyl)sulfon sind als Diole geeignet.

Geeignete langkettige Glykole, die zur Herstellung der weichen Segmente der Copolyätherester verwendet werden können, sind z.B. Poly(alkylenäther)glykole, wie Poly(äthylenäther)glykole und Poly(tetramethylenäther)glykol. Die Molekulargewichte dieser langkettigen Glykole betragen im allgemeinen 400 bis 6000.

Die verzweigend bzw. vernetzend wirkenden Comonomeren bzw. deren esterbildende Derivate, die zur Herstellung der erfindungsgemässen Polyester verwendet werden, tragen drei oder mehr, im allgemeinen bis 10 funktionelle Gruppen, welche zur Ausbildung von Esterbindungen befähigt sind. Bevorzugte verzweigend bzw. vernetzend wirkende Comonomere haben 3 bis 6 funktionelle Gruppen dieser Art je Molekül, insbesondere 3 bis 6 Hydroxylgruppen oder ferner Carboxylgruppen und/oder Carboxymethylgruppen. Geeignete tri- oder höherfunktionelle Verbindungen, die zu Esterbindungen führen können, sind beispielsweise Trimethylolpropan, Trimethyloläthan, Pentaerythrit, Polyäthertriole, Glycerin, Trimesinsäure, Trimellitsäure, Pyromellitsäure und Hydroxyisophthalsäure. Auch flüssige Polyacrylate, sogenannte Polyacrylatole, die mindestens eine, meist 3 bis 10, insbesondere 3 bis 6 Hydroxylgruppe aufweisen, wie sie in der GB-A Nr. 1469682 beschrieben sind, können mit Vorteil eingesetzt werden. Derartige flüssige Acrylestercopolymerisate (d.h. Polyacrylatole) enthalten a) 55 bis 97 Gew.% Acrylsäureester 3 bis 12 C-Atome enthaltender nicht tertiärer Alkanole, b) 20 bis 25 Gew.% mindestens eine Hydroxylgruppe enthaltende Acryl- und/oder Methacrylsäurealkylester und c) 0 bis 20 Gew.% weitere monoolefinisch ungesättigte Monomere einpolymerisiert und weisen ein mittleres Molekulargewicht von 1000 bis 10000, vorzugsweise von 2000 bis 5000, und einen Stockpunkt unter 15° C, meist von −15 bis +15° C, auf, wobei die Molekulargewichte mit dem Mechrolab-Dampfdruckosmometer in Aceton, der Stockpunkt nach ASTM-D 97-57 bestimmt ist. Als funktionelle Verbindungen dieser Art, d.h. als verzweigend bzw. vernetzend wirkende Comonomere von besonderem Interesse sind 3 bis 6 Hydroxylgruppen je Molekül aufweisende Alkanole einschliesslich solche flüssige Polyacrylatole.

Die verzweigend bzw. vernetzend wirkenden Comonomeren werden bei der Herstellung der segmentierten Polyätherester, vorzugsweise in der frühest möglichen Stufe, beispielsweise bei der Umesterung, in den Verfahrensgang eingebracht. Man kann das verzweigend und/oder vernetzend wirkende Comonomere auch während einer frühen Phase der Polykondensationsreaktion zugeben. Im Falle niedriger als 200° C siedender Verzweigungs- und/oder Vernetzungsmittel kann ein Anteil vor der Reaktion aus dem Polykondensationsgemisch abdestillieren. Es wird bevorzugt, das Verzweigungs- oder Vernetzungsmittel in einer früheren Verfahrensstufe zuzusetzen, um diese Komplikation zu vermeiden und um die grösstmögliche Regelmässigkeit seiner Verteilung innerhalb des Polykondensats zu erzielen.

Copolyätherester, die aus 35 bis 95, vorzugsweise 45 bis 75 mol% Terephthalsäure, 5 bis 65, vorzugsweise 25 bis 55 mol% Isophthalsäure und/oder Adipinsäure, 15 bis 99,8, vorzugsweise 40 bis 99 mol% Butandiol-1,4 und 0,2 bis 85, vorzugsweise 1 bis 60 mol% Polytetramethylenätherglykol eines Molekulargewichts von 600 bis 3000 und 0,01 bis 5, vorzugsweise 0,5 bis 2,5 mol% eines Verzweigungs- bzw. Vernetzungsmittels, wie Trimethylolpropan oder eines flüssigen, 1 bis 2 Hydroxylgruppen je Molekül aufweisenden Polyacrylatols hergestellt sind, werden besonders bevorzugt.

Die erfindungsgemässen Copolyätherester können durch an sich konventionelle Polykondensationsverfahren unter den hierfür üblichen Temperatur- und Druckbedingungen hergestellt werden.

Ein bevorzugtes Verfahren besteht darin, dass man ein Gemisch aus Terephthalsäure- und Isophthalsäuredimethylester mit Polytetramethylenätherglykol und überschüssigem Butandiol in Gegenwart eines Katalysators auf 150 bis 260° C erhitzt und das sich durch Umesterung bildende Methanol abdestilliert. Man erhitzt weiter, bis die Methanolentwicklung aufgehört hat. Je nach der Temperatur, dem Katalysator und dem Diolüberschuss ist die Polykondensation innerhalb einiger Minuten bis einiger Stunden beendet. Das Verfahren führt zur Bildung eines Prepolymeren von niedrigem Molekulargewicht, das sich in den segmentierten Copolyester gemäss der Erfindung von hohem Molekulargewicht umwandeln lässt.

Das Prepolymere wird dann durch Abdestillieren des über schüssigen Butandiols in den segmentierten elastomeren Copolyätherester von hohem Molekulargewicht übergeführt. Die besten Ergebnisse erhält man gewöhnlich, wenn diese letzte Verfahrensstufe der Destillation bei Drücken von weniger als 1,33 mbar und Temperaturen von 240 bis 260° C im Verlaufe von weniger als 2 h durchgeführt wird.

Für die Polykondensation können die üblichen Katalysatoren verwendet werden, vorzugsweise arbeitet man mit Titansäureestern von 4 bis 20 C-Atomen enthaltenden Alkanolen, wie Tetrabutyltitanat, für sich oder in Kombination mit Magnesium- oder Zinkacetat.

Mitunter ist es von Vorteil, die Copolyätherester gegen die Einwirkung von Wärme und ultraviolettem Licht zu stabilisieren. Hierfür geeignete übliche Stabilisiermittel und/oder Oxydationsverzögerer sind z.B. Phenole und ihre Derivate, Amine und ihre Derivate, Harnstoffe und ihre Derivate, Barbiturate, Verbindungen, die sowohl Hydroxylgruppen als auch Aminogruppen enthalten, Hydroxyamine, Oxime, polymere Phenolester und Salze von mehrwertigen Metallen, in denen sich das Metall in seinem niedrigeren Wertigkeitszustand befindet sowie Phosphite. Beispiele sind Hydrochinon, 2,6-Ditert.-butyl-p-kresol, Tetrakis[methylen-3-(3',5'-ditert.-butyl-4'-hydroxyphenyl)propionat]methan, 4,4'-Bis-(2,6-

ditert.-butylphenol), 1,3,5-Trimethyl-2,4,6-tris-(3,5-ditert.-butyl-4-hydroxylbenzylbenzol), 4,4'-Butylidenbis-(6-tert.-butyl-n-kresol) und 4,4-Thiobis-(6-tert.-butylmetakresol).

Typische als Stabilisatoren geeignete Amine sind aromatische Amine, wie N,N'-Bis-β-naphthyl)-4-phenylendiamin, N,N'-Bis-(1-methylheptyl)-p-phenylendiamin und Phenyl-β-naphthylamin.

Beispiele für geeignete Harnstoffe sind N,N'-Dimethylharnstoff, N,N'-Diphenylharnstoff oder N,N'-Diphenylthioharnstoff.

Die neuen segmentierten Copolyätherester sind für sich allein schon hervorragende Haftkleber, deren vorteilhafte Eigenschaften aber durch einen Gehalt an thermoplastischen Harzen, insbesondere von niedrigem Molekulargewicht, die mit den Copolyätherestern verträglich sind, noch verbessert werden. Sie sind bis mindestens 150° C wärmebeständig und weisen Schmelzviskositäten (gemessen nach ASTM-D 1824-66 mittels Brookfield-Viskosimeter) von weniger als etwa 10 000 cPo bei 200° C auf. Geeignete klebrigmachende thermoplastische Harze sind Naturharze, modifizierte Naturharze sowie Kunstharze. Dabei handelt es sich um feste, amorphe, harte bis spröde, thermoplastische Substanzen, die bei Temperaturen zwischen 40 und 140° C, vorzugsweise zwischen 75 und 125° C, erweichen — gemessen mit Ring + Kugel nach ASTM-E 28-67 — im allgemeinen ein Molgewicht bzw. mittleres Molgewicht zwischen 200 und 7000, vorzugsweise zwischen 500 und 4000, aufweisen und eine Schmelzviskosität von weniger als etwa 10 000 mPa·s bei 200° C haben.

Vorzugsweise setzt man diejenigen Harze ein, die möglichst wenig Säuregruppen enthalten und deren Säurezahl unter 100, vorzugsweise zwischen 0 und 70, liegt.

Beispiele für solche klebrigmachenden Harze sind Terpenharze (auch Polyterpenharze genannt), Balsamharze, Kolophoniumarten, hydriertes Kolophonium und Ester des Kolophoniums oder des hydrierten Kolophoniums (wie sie z.B. von Hercules Chemical Co. verfügbar sind), Ester von Hydroxyabietylalkohol, aromatische Kohlenwasserstoffharze mit Einschluss von Styrolpolymeren und -copolymeren (z.B. die niedermolekularen Polystyrolharze von Hercules Chemical Co. mit den Warenzeichen ® Piccolastic und ® Kristalex Resins) und α-Methylstyrol/Vinyltoluolharze (von Hercules Chemical Co. mit dem Warenzeichen ® Piccotex, die Cumaronindenharze (wie sie z.B. von Neville Chemical Co. unter dem Warenzeichen ® Picco N vertrieben werden), aromatische-aliphatische Copolymerharze (wie die z.B. von BASF unter dem Warenzeichen ® Carbigen vertrieben werden), aromatische Petroleumöle (wie sie z.B. von der Shell Chemical Co. unter dem Warenzeichen ® Shellflex vertrieben werden), phenolmodifizierte Harze und Keton- und Aldehydharze.

Als Zusatzstoffe kommen ferner Weichmacher, wie Dioctylphthalat, Pigmente, wie Calciumcarbonat, Siliciumdioxid, Titandioxid und Zinkoxid, und Modifizierungsmittel, wie Styrol/Butadien-Copolymere, Styrol/Isopren-Copolymere, Äthylen/Vinylacetat-Copolymere, Äthylen/Acrylat-Copolymere, Polyacrylate, inerte Füllstoffe, wie Bariumsulfat, und Stoffe, um die Bindegeschwindigkeit zu erhöhen, wie hydriertes Rizinusöl (von Baker Castrol Oil Co. unter dem Warenzeichen ® Castor Wax vertrieben) in Frage.

Die Beurteilung der Klebeeigenschaften von flächigen Substraten, die unter Verwendung der erfindungsgemässen Polyätheresterhaftkleber beschichtet sind, kann durch Messung der Scherfestigkeit als Mass für die Kohäsion und der Schälfestigkeit als zusammenfassendes Mass für Kohäsion und Oberflächenklebrigkeit erfasst werden. Für die Prüfung werden Folien aus Polyäthylenglykolterephthalat derart beschichtet, dass sich eine Schichtdicke von 25 µm ergibt. Die beschichtete Folie wird in 2 cm breite Streifen geschnitten und diese Streifen auf eine verchromte Messingplatte aufgebracht. Die Platte mit den Streifen wird 24 h bei 23° C und 65% relativer Luftfeuchtigkeit gelagert.

Bei der Messung der Schälfestigkeit werden die Prüfstreifen parallel zur Klebeschicht unter einem Winkel von 180° mit einer Geschwindigkeit von 300 mm/min abgezogen. Die hierzu erforderliche Kraft wird gemessen.

Bei der Messung der Scherfestigkeit wird eine verklebte Fläche von 20 × 25 mm zurechtgeschnitten, die Platte senkrecht eingespannt und der überhängende Teil des Klebestreifens mit einem Gewicht von 1 kg belastet. Es wird Zeit bestimmt, bis sich die Verklebung löst. Die Messung wird bei 23° C und bei 50° C durchgeführt. Für alle Messungen werden Dreifachbestimmungen durchgeführt.

Die folgenden Beispiele veranschaulichen die Vorteile der erfindungsgemässen Polyätherester bzw. deren Mischungen. Die genannten Teile sind Gewichtsteile, sie verhalten sich zu den Raumteilen wie Kilogramm zu Liter.

Die Bestimmung der relativen Viskosität erfolgt in einer Lösung aus Phenol/o-Dichlorbenzol (Gewichtsverhältnis 3:2).

*Vergleichsversuch A*

Ein Copolyätherester wird hergestellt aus

| | |
|---|---|
| 105 | Teilen Dimethylterephathalat |
| 45 | Teilen Dimethylisophthalat |
| 104 | Teilen Butandiol-1,4 |
| 150 | Teilen Polytetramethylenätherglykol (MG=2000) |
| 0,15 | Teilen Tetrabutylorthotitanat |

Nach den an sich üblichen Verfahren der Umesterung und Polykondensation wird ein Copolyätherester der relativen Viskosität $\eta_{rel.}$=1910 erhalten. Als Stabilisator wird 1 Gew.%, bezogen auf den Copolyätherester 2,4,6-Ditert.-butyl-p-kresol (=Stabilisator A), nach der Polykondensation zugegeben.

Nach Beendigung der Polykondensation wird die Copolyätheresterschmelze mit 200 Teilen eines handelsüblichen Terpen/Phenol-Harzes

(® Alresen PK 500 der Reichold-Albert-Chemie AG, Erweichungspunkt etwa 130° C–Ring+Kugel nach ASTM-E 28-67–Säurezahl 50 bis 65–DIN 53 183) versetzt und so lange vermischt, bis eine homogene Lösung erhalten wird.

Die Mischung weist nun eine relative Viskosität von $\eta_{rel.}$=1374 auf.

Die mit dieser Mischung als Haftkleber erreichten Klebewerte sind in Tabelle 1 angegeben.

*Beispiel 1:*

Ein Copolyätherester wird hergestellt aus

| | |
|---|---|
| 105 | Teilen Dimethylterephthalat |
| 45 | Teilen Dimethylisophthalat |
| 104 | Teilen Butandiol-1,4 |
| 150 | Teilen Polytetramethylenätherglykol (MG=2000) |
| 13,4 | Teilen Trimethylolpropan |
| 0,15 | Teilen Tetrabutylorthotitanat |

Nach den an sich üblichen Verfahren der Umesterung und Polykondensation wird ein Copolyätherester der relativen Viskosität $\eta_{rel.}$=2310 erhalten. Von Stabilisator A wird 1 Gew.%, bezogen auf den Polyätherester, nach der Polykondensation zugegeben.

Nach Beendigung der Polykondensation wird die Copolyätheresterschmelze mit 200 Teilen des Terpen/Phenol-Harzes ® Alresen PK 500 versetzt und bis zur Homogenität vermischt.

Die Mischung weist nun eine relative Viskosität $\eta_{rel.}$=1566 auf.

Die mit dieser Mischung als Haftkleber erreichten Klebewerte sind in Tabelle 1 angegeben.

*Beispiel 2:*

Ein Copolyätherester wird hergestellt aus

| | |
|---|---|
| 105 | Teilen Dimethylterephthalat |
| 45 | Teilen Dimethylisophthalat |
| 104 | Teilen Butandiol-1,4 |
| 150 | Teilen Polytetramethylenätherglykol (MG=2000) |
| 10 | Teilen Glycerin |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=2408 erhalten. Von Stabilisator A wird 1 Gew.%, bezogen auf den Polyätherester, nach der Polykondensation zugegeben.

Nach Beendigung der Polykondensation wird die Copolyätheresterschmelze mit 200 Teilen des Terpen/Phenol-Harzes ® Alresen PK 500 versetzt und bis zur Homogenität vermischt.

Die Mischung weist nun eine relative Viskosität $\eta_{rel.}$=1550 auf.

Die mit dieser Mischung als Haftkleber erreichten Klebewerte sind in Tabelle 1 angegeben.

*Beispiel 3:*

Ein Copolyätherester wird hergestellt aus

| | |
|---|---|
| 105 | Teilen Dimethylterephthalat |
| 45 | Teilen Dimethylisophthalat |
| 104 | Teilen Butandiol-1,4 |
| 150 | Teilen Polytetramethylenätherglykol (MG=2000) |
| 40 | Teilen flüssiges Polyacrylatol mit (hergestellt nach Beispiel 2 der GB-A Nr. 1469682) |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=2280 erhalten. Von Stabilisator A wird 1 Gew.%, bezogen auf den Polyätherester, nach der Polykondensation zugegeben.

Nach Beendigung der Polykondensation wird die Copolyätheresterschmelze mit 200 Teilen des Terpen/Phenol-Harzes ® Alresen PK 500 versetzt und bis zur Homogenität vermischt.

Die Mischung weist nun eine relative Viskosität $\eta_{rel.}$=1534 auf.

Die mit dieser Mischung als Haftkleber erreichten Klebewerte sind in Tabelle 1 angegeben.

*Beispiel 4:*

Ein Copolyätherester wird hergestellt aus

| | |
|---|---|
| 105 | Teilen Dimethylterephthalat |
| 45 | Teilen Dimethylisophthalat |
| 104 | Teilen Butandiol-1,4 |
| 150 | Teilen Polytetramethylenätherglykol (MG=2000) |
| 25,4 | Teilen 1,2,4,5-Benzoltetracarbonsäure (=Pyromellitsäure) |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=2276 erhalten. Von Stabilisator A wird 1 Gew.%, bezogen auf den Copolyätherester, nach der Polykondensation zugegeben.

Nach Beendigung der Polykondensation wird die Copolyätheresterschmelze mit 200 Teilen des Terpen/Phenol-Harzes ® Alresen PK 500 versetzt und bis zur Homogenität vermischt.

Die Mischung weist nun eine relative Viskosität $\eta_{rel.}$=1506 auf.

Die auf dieser Mischung als Haftkleber erreichten Klebewerte sind in Tabelle 1 angegeben.

*Beispiel 5:*

Ein Copolyätherester wird hergestellt aus

| | |
|---|---|
| 105 | Teilen Dimethylterephthalat |
| 45 | Teilen Dimethylisophthalat |
| 104 | Teilen Butandiol-1,4 |
| 150 | Teilen Polytetramethylenätherglykol (MG=2000) |
| 21,0 | Teilen 1,2,4-Benzoltricarbonsäure (=Trimellitsäure) |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=2305 erhalten. Von Stabilisator A wird 1 Gew.%, bezogen auf den Copolyätherester, nach der Polykondensation zugegeben.

Nach Beendigung der Polykondensation wird die Copolyätheresterschmelze mit 200 Teilen des Terpen/Phenol-Harzes ® Alresen PK 500 versetzt und bis zur Homogenität vermischt.

Die Mischung weist nun eine relative Viskosität $\eta_{rel.}$=1490 auf.

Die auf dieser Mischung als Haftkleber erreichten Klebewerte sind in Tabelle 1 angegeben.

*Beispiel 6:*

Ein Copolyätherester wird hergestellt aus

| | |
|---|---|
| 105 | Teilen Dimethylterephthalat |
| 45 | Teilen Dimethylisophthalat |
| 104 | Teilen Butandiol-1,4 |
| 150 | Teilen Polytetramethylenätherglykol (MG=2000) |
| 18,2 | Teilen Hydroxyisophthalsäure |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=2295 erhalten. Von Stabilisator A wird 1 Gew.%, bezogen auf den Copolyätherester, nach der Polykondensation zugegeben.

Nach Beendigung der Polykondensation wird die Copolyätheresterschmelze mit 200 Teilen des Terpen/Phenol-Harzes ® Alresen PK 500 versetzt und bis zur Homogenität vermischt.

Die Mischung weist nun eine relative Viskosität $\eta_{rel.}$=1553 auf.

Die auf dieser Mischung als Haftkleber erreichten Klebewerte sind in Tabelle 1 angegeben.

*Beispiel 7:*

Ein Copolyätherester wird hergestellt aus

| | |
|---|---|
| 105 | Teilen Dimethylterephthalat |
| 45 | Teilen Dimethylisophthalat |
| 104 | Teilen Butandiol-1,4 |
| 150 | Teilen Polytetramethylenätherglykol (MG=2000) |
| 13,6 | Teilen Pentaerythrit |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=2352 erhalten. Von Stabilisator A wird 1 Gew.%, bezogen auf den Copolyätherester, nach der Polykondensation zugegeben.

Nach Beendigung der Polykondenstion wird die Copolyätheresterschmelze mit 200 Teilen des Terpen/Phenol-Harzes ® Alresen PK 500 versetzt und bis zur Homogenität vermischt.

Die Mischung weist nun eine relative Viskosität $\eta_{rel.}$=1562 auf.

Die auf dieser Mischung als Haftkleber erreichten Klebewerte sind in Tabelle 1 angegeben.

*Beispiel 8:*

Ein Copolyätherester wird hergestellt aus

| | |
|---|---|
| 105 | Teilen Dimethylterephthalat |
| 45 | Teilen Dimethylisophthalat |
| 104 | Teilen Butandiol-1,4 |
| 150 | Teilen Polytetramethylenätherglykol (MG=2000) |
| 12,0 | Teilen Trimethyloläthan |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=2326 erhalten. Von Stabilisator A wird 1 Gew.%, bezogen auf den Copolyätherester, nach der Polykondensation zugegeben.

Nach Beendigung der Polykondensation wird die Copolyätheresterschmelze mit 200 Teilen des Terpen/Phenol-Harzes ® Alresen PK 500 versetzt und bis zur Homogenität vermischt.

Die Mischung weist nun eine relative Viskosität $\eta_{rel.}$=1534 auf.

Die auf dieser Mischung als Haftkleber erreichten Klebewerte sind in Tabelle 1 angegeben.

*Vergleichsversuch B*

Ein Copolyätherester wird hergestellt aus

| | |
|---|---|
| 136 | Teilen Dimethylterephthalat |
| 52 | Teilen Dimethyladipat |
| 135 | Teilen Butandiol-1,4 |
| 282 | Teilen Polytetramethylenätherglykol (MG=2000) |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=1746 erhalten. Von Stabilisator A wird 1 Gew.%, bezogen auf den Polyätherester, nach der Polykondensation zugegeben.

Nach Beendigung der Polykondensation wird die Copolyätheresterschmelze mit 310 Teilen eines handelsüblichen Kolophoniumesters (® Foral 85 der Firma Hercules Powder, Glycerinester von hydriertem Kolophonium, Erweichungspunkt etwa 75° C – nach Ring+Kugel, ASTM-E 28-67 – Säurezahl 9) versetzt und bis zur Homogenität vermischt.

Die Mischung weist nun eine relative Viskosität von $\eta_{rel.}$=1368 auf.

Die mit dieser Mischung als Haftkleber erzielten Klebewerte sind in Tabelle 1 angegeben.

*Beispiel 9:*

Ein Copolyätherester wird hergestellt aus

| | |
|---|---|
| 136 | Teilen Dimethylterephthalat |
| 52 | Teilen Dimethyladipat |
| 135 | Teilen Butandiol-1,4 |
| 20 | Teilen Trimethylolpropan |
| 282 | Teilen Polytetramethylenätherglykol (MG=2000) |
| 0,15 | Teilen Tetrabutylorthotitanat |

Nach dem an sich üblichen Verfahren der Umesterung und Polykondensation wird ein Copolyätherester der relativen Viskosität $\eta_{rel.}$=2312 erhalten. Von Stabilisator A wird 1 Gew.%, bezogen auf den Polyätherester, nach der Polykondensation zugegeben.

Nach Beendigung der Polykondensation wird die Copolyätheresterschmelze mit 310 Teilen des Kolophoniumesters ® Foral 85 versetzt und bis zur Homogenität vermischt.

Die Mischung weist nun eine relative Viskosität von $\eta_{rel.}=1548$ auf.

Die mit dieser Mischung als Haftkleber erzielten Klebewerte sind in Tabelle 1 angegeben.

*Beispiel 10:*

Ein Copolyätherester wird hergestellt aus

136 Teilen Dimethylterephthalat
52 Teilen Dimethyladipat
135 Teilen Butandiol-1,4
40 Teilen Polyacrylatol mit 3 Hydroxylgruppen je Molekül, hergestellt nach Beispiel 2 der GB-A Nr. 1469682
282 Teilen Polytetramethylenätherglykol (MG=2000)
0,15 Teilen Tetrabutylorthotitanat

Nach dem an sich üblichen Verfahren der Umesterung und Polykondensation wird ein Copolyätherester der relativen Viskosität $\eta_{rel.}=2236$ erhalten. Von Stabilisator A wird 1 Gew.%, bezogen auf den Polyätherester, nach der Polykondensation zugegeben.

Nach Beendigung der Polykondensation wird die Copolyätheresterschmelze mit 310 Teilen des Kolophoniumesters ® Foral 85 versetzt und bis zur Homogenität vermischt.

Die Mischung weist nun eine relative Viskosität von $\eta_{rel.}=1552$ auf.

Die mit dieser Mischung als Haftkleber erzielten Klebewerte sind in Tabelle 1 angegeben.

Tabelle 1

Schäl- und Scherfestigkeiten der Polyätherester der Vergleichsversuche A und B und der Beispiele 1 bis 10 im Gemisch mit handelsüblichen klebrigmachenden Harzen

| Mischung von | Schälfestigkeit 180°C N/2 cm | Scherfestigkeit 5 cm² | |
|---|---|---|---|
| | | 1000 g, 23°C | 1000 g, 50°C |
| Vergleichsversuch A | 14,9 K | 8 h 12′ K | 37′ K |
| Beispiel 1 | 34,5 K | >24 h | 3 h 7′ K |
| Beispiel 2 | 28,7 K | >24 h | 2 h 25′ K |
| Beispiel 3 | 29,6 K | >24 h | 2 h 55′ K |
| Beispiel 4 | 27,8 K | >24 h | 2 h 5′ |
| Beispiel 5 | 25,3 K | >24 h | 1 h 40′ |
| Beispiel 6 | 28,5 K | >24 h | 2 h 20′ |
| Beispiel 7 | 26,9 K | >24 h | 1 h 50′ |
| Beispiel 8 | 32,2 K | >24 h | 2 h 10′ |
| Vergleichsversuch B | 15,3 K | 16 h 20′ K | 58′ K |
| Beispiel 4 | 23,8 K | 20 h 10′ K | 1 h 18′ K |
| Beispiel 5 | 24,7 K | 19 h 15′ K | 57′ K |

K = Kohäsionsbruch

**Patentansprüche**

1. Thermoplastische, segmentierte, elastomere Copolyätherester, die im wesentlichen aus einer Vielzahl von wiederkehrenden, durch Esterbindungen miteinander verknüpften kurzkettigen und langkettigen Estereinheiten bestehen, wobei der Anteil der kurzkettigen Estereinheiten der Formel

$$-\underset{\underset{O}{\|}}{C}-R-\underset{\underset{O}{\|}}{C}-O-A-O- \qquad (I)$$

15 bis 75 Gew.% beträgt und der Anteil der langkettigen Estereinheiten der Formel

$$-\underset{\underset{O}{\|}}{C}-R-\underset{\underset{O}{\|}}{C}-O-B-O- \qquad (II)$$

25 bis 85 Gew.% des Copolyesters beträgt, und R den nach Abzug der Carboxylgruppen von aromatischen, aliphatischen oder cycloaliphatischen Dicarbonsäuren mit einem Molekulargewicht <350 verbleibenden zweiwertigen Rest, A den nach Abzug der Hydroxylgruppen von einem Diol mit einem Molekulargewicht <250 verbleibenden zweiwertigen Rest und B den nach Abzug der endständigen Hydroxylgruppen von einem langkettigen Glykol verbleibenden zweiwertigen Rest bedeuten, dadurch gekennzeichnet, dass sie 0,01 bis 5 mol%, bezogen auf den Copolyester an verzweigend wirkenden mindestens 3-10 Hydroxy-, Carboxyl- und/oder Carboxymethylgruppen je Molekül aufweisenden Verbindungen in das Polymermolekül eingebaut enthalten.

2. Verwendung der thermoplastischen, segmentierten, elastomeren Copolyätherester gemäss Anspruch 1 in Mengen von 1 bis 99 Gew.% als Bestandteil von Haftklebern zusammen mit üblichen klebrigmachenden thermoplastischen Harzen, die mit dem Copolyätherester verträglich sind.

## Claims

1. Thermoplastic segmented elastomeric copolyetheresters which consist essentially of a plurality of recurring short-chain and long-chain ester units linked to one another by ester bonds, the proportion of the short-chain ester units of the formula:

$$-\underset{\underset{O}{\|}}{C}-R-\underset{\underset{O}{\|}}{C}-O-A-O- \qquad (I)$$

where R is the divalent radical remaining after removal of the carboxyl groups of aromatic aliphatic or cycloaliphatic dicarboxylic acids having a molecular weight $<350$ and A is the divalent radical remaining after removal of the hydroxyl groups of a diol having a molecular weight $<250$, being from 15 to 75% by weight, and the proportion of the long-chain ester units of the formula:

$$-\underset{\underset{O}{\|}}{C}-R-\underset{\underset{O}{\|}}{C}-O-B-O- \qquad (II)$$

where R is defined as above and B is the divalent radical remaining after removal of the terminal hydroxyl groups from a long-chain glycol, being from 25 to 85% by weight of the copolyester, and which contain from 0.01 to 5 mol%, based on copolyester, of compounds, serving as branching agents and containing from at least 3 to 10 hydroxyl, carboxyl and/or carboxymethyl groups per molecule, chemically condensed into the polymer molecule.

2. The use of the thermoplastic segmented elastomeric copolyetheresters as claimed in claim 1 in amounts of from 1 to 99% by weight as a component of pressure-sensitive adhesives, together with conventional tackifying thermoplastic resins which are compatible with the copolyetherester.

## Revendications

1. Copolyétheresters thermoplastiques élastomères segmentés, constitués essentiellement d'une pluralité de motifs ester à longue chaîne et courte chaîne, se répétant et reliés les uns aux autres par des liaisons ester, la proportion des motifs ester à courte chaîne de formule:

$$-\underset{\underset{O}{\|}}{C}-R-\underset{\underset{O}{\|}}{C}-O-A-O- \qquad (I)$$

étant de 15 à 75% en poids, et la proportion des motifs ester à longue chaîne de formule:

$$-\underset{\underset{O}{\|}}{C}-R-\underset{\underset{O}{\|}}{C}-O-B-O- \qquad (II)$$

étant de 25 à 85% en poids, par rapport au copolyester, R représentant le reste bivalent restant, après enlèvement des groupes carboxyle, d'acides dicarboxyliques, aromatiques, aliphatiques ou cycloaliphatiques, d'un poids moléculaire inférieur à 350, A représentant le reste bivalent restant, après enlèvement des groupes hydroxyle, d'un diol de poids moléculaire inférieur à 250, et B représentant le reste bivalent restant, après enlèvement des groupes hydroxyle terminaux, d'un glycol à longue chaîne, caractérisés par le fait qu'ils contiennent, incorporés dans la molécule de polymère, 0,01 à 5 mol%, rapportés au copolyester, de composés à action ramifiante comportant au moins 3 à 10 groupes hydroxy, carboxyle et/ou carboxyméthyle par molécule.

2. Utilisation des copolyétheresters thermoplastiques élastomères segmentés selon la revendication 1, en proportion de 1 à 99% en poids, comme composants de colles avec des résines thermoplastiques usuelles à effet adhésif, qui sont compatibles avec le copolyétherester.